# EUROPEAN PATENT APPLICATION

(11) **EP 1 881 544 A1**
(43) Date of publication of application: **23.01.2008**
(21) Application number: 05781988.0
(22) Date of filing: 09.09.2005
(51) Int. Cl.: H01M 4/02, H01M 4/58, H01M 4/60, H01M 4/62

(54) **POSITIVE ELECTRODE MATERIAL FOR LITHIUM SECONDARY CELL**

(30) Priority: 26.01.2005 JP 2005017843
(71) Applicant: Shirouma Science Co., Ltd., Shimoniikawa-gun, Toyama 939-0643 (JP); Fuji Jukogyo Kabushiki Kaisha, Tokyo 160-0023 (JP); MITSUI & CO., LTD., Chiyoda-ku Tokyo-to 100-0004 (JP); Oyama, Noboru, Musashino-shi, Tokyo 180-0002 (JP)
(72) Inventor: YAMAGUCHI, Shuichiroc/o shirouma Science CoLtd, Toyama 939-0643 (JP); HAMAZAKI, Kenichi c/oShirouma scienceCoLtd, Toyama 939-0643 (JP); MOCHIZUKI, Yasumasa c/oShimomura Science coLtd, Toyama 939-0643 (JP); SHIMOMURA, Takeshi c/o ShimomuraScienceCo Ltd, Toyama 939-0643 (JP); OZAKI, Masahide c/oshiroumaScienceCo Ltd, Toyama 939 -0643 (JP); YATABE, Satoru c/o Shirouma scienceCo Ltd, Toyama 939 -0643 (JP)
(74) Representative: Jennings, Nigel Robin
(86) International application number: PCT/JP2005/016655
(87) International publication number: WO 2006/080110

(57) **Abstract**

It is a first object of the present invention to provide a lithium secondary battery using a conductive polymer such as polyaniline, which exhibits a stable electrical conductivity over a long time. To achieve the first object, there is provided a positive electrode material for a lithium secondary battery, comprising an electrically conductive polymer having an amino group, a hydrogen bonding compound, and a protonic acid. Further, it is a second object of the present invention to provide a lithium secondary battery exhibiting a high charge-discharge capacity while using a conductive polymer such as polyaniline. To achieve the second object, there is provided a positive electrode material for a lithium secondary battery, comprising an electrically conductive polymer, and LiNiO₂ and/or liFePO₄.

## Description

### Technical Field

The present invention relates to a positive electrode material for a thin film type lithium secondary battery used in, for example, a portable thin type electronic appliance or an electric vehicle, and particularly, to a positive electrode material for a polymer lithium secondary battery that is used as a power source requiring a high energy density.

### Background Art

In conventional polymer lithium secondary batteries, particles of inorganic metal oxide such as lithium cobaltate (LiCoO₂) or lithium manganate (LiMnO₂) are bound by a redox-inactive binder such as polyvinylidene fluoride and molded, and are used as an positive electrode, while particles of carbon-based materials are similarly bound and molded, and are used a negative electrode. In recent years, a secondary battery having a high energy density has come to be required, and an organic material having a high degree of freedom in the material design and capable of a chemical synthesis has come to attract attentions as a positive electrode material capable of achieving the high energy density. A research is being conducted on a conductive polymer such as polyaniline, polythiophene or polypyrrole as a polymer positive electrode material. The theoretical capacity of these polymer positive electrode materials is 100 to 150 Ah/kg. A coin type secondary battery for the memory back-up has been put to the practical use as a secondary battery using polyaniline.

Also, a conductive polymer exhibiting a high electron conductivity attracts attentions not only as a positive electrode active material but also as a binder. It is known that polyaniline, in a doped state, exhibits an electrical conductivity. In U.S. Patent No. 5,403,913, a method is disclosed, in which a phenolic compound is doped as a second dopant to further improve the electrical conductivity of such a conductive polyaniline. This method comprises allowing a phenolic compound as a second dopant to act on polyaniline doped with a protonic acid as a first dopant. It is reported that by so doing, the electrical conductivity of polyaniline is increased by 500 to 1000 times. The second dopant changes the polyaniline arrangement from a dense coiled structure into an extended coiled structure, and the extended coiled structure is retained even after removal of the second dopant (see MacDiarmid and Epstein, Synthetic Metals, 69, 85-92, 1995). However, although the treatment with the second dopant certainly makes it possible to increase the electrical conductivity, it has been found that, if such a polyaniline is incorporated in a lithium secondary battery and is used, the structure within the material is changed by the repetition of the charge-discharge operations so as to deteriorate gradually the electrical conductivity. Thus, it was demanded of a positive electrode material exhibiting a stable electrical conductivity over a long time.

On the other hand, a composite positive electrode material comprising 2,5-dimercapto-1,3,4-thiadiazole and polyaniline is reported in N. Oyama, et. al., Nature, vol. 373,598-600 (1995) as a positive electrode material using polyaniline. In this composite positive electrode material, a conductive polymer of polyaniline catalyzes the oxidation-reduction reaction of an organic sulfur compound so as to accelerate the electron migrating reaction rate, with the result that the particular composite positive electrode material is featured in that the positive electrode material is capable of achieving the required high energy density. However, the composite positive electrode material noted above exhibits a low electrical conductivity and, thus, performs the function of a practical positive electrode material only when the positive electrode material is in the form of a thin film having a thickness not larger than 10 µm. Under the circumstances, it is of high importance to obtain a positive electrode material exhibiting an improved electron conductivity, an improved charge transfer reaction rate and, a higher charge-discharge capacity as a material of a positive electrode formed of a polymer material.

### Disclosure of Invention

Accordingly, it is a first object of the present invention to provide a lithium secondary battery using a conductive polymer such as polyaniline, which exhibits a stable electrical conductivity over a long time.

Further, it is a second object of the present invention to provide a lithium secondary battery exhibiting a high charge-discharge capacity while using a conductive polymer such as polyaniline.

To achieve the first object noted above, according to a first aspect of the present invention, there is provided a positive electrode material for a lithium secondary battery, comprising a conductive polymer having an amino group, a hydrogen bonding compound and a protonic acid.

Also, to achieve the second object noted above, according to a second aspect of the present invention, there is provided a positive electrode material for a lithium secondary battery, comprising particles of a conductive polymer and particles of a conductive material.

Further, to achieve the second aspect noted above, according to a third aspect of the present invention, there is provided a positive electrode material for a lithium secondary battery, the positive electrode material comprising a conductive polymer, and LiNiO₂ and/or LiFePO₄.

### Brief Description of Drawings

The single figure is a graph showing a relationship between the number of charge-discharge cycles and the charge-discharge capacity in the CV measurement for the lithium secondary battery of the present invention and that of Comparative Examples.

### Best Mode for Carrying Out the Invention

A positive electrode material according to the first aspect of the present invention comprises a polymer having an amino group, a hydrogen bonding compound and a protonic acid.

The polymer used in the first aspect of the present invention comprises a polymer having an amino group or an amine group, and a polyaniline compound (a polymer of aniline or an aniline derivative, including a commercially available emeraldine base type) and a polypyrrole compound (a polymer of pyrrole or a pyrrole derivative) may be exemplified.

The protonic acid serves to impart an electrical conductivity to the polymer having an amino group, and an organic sulfonic acid such as camphor sulfonic acid may be exemplified. The protonic acid, when used in an amount of 0.3 to 1 mol per mol of the repeating unit (monomer unit) of the polymer having an amino group, can further improve the electrical conductivity of the polymer having an amino group.

The hydrogen bonding compound bridges, by means of the hydrogen bond, the molecules of the polymer having amino groups in a densely coiled structure or in the form of random coil structure so as to maintain the polymer having amino groups in a stretched state, thereby maintaining over a long period the electrical conductivity of the polymer having amino groups, which has been made to exhibit an electrical conductivity by the addition of the protonic acid. As such a hydrogen bonding compound, a pyrrole compound having a pyrrole skeleton, and a pyridine compound having a pyridine skeleton may be exemplified. AS the hydrogen bonding compound, a compound having a pyridine skeleton such as bipyridyl is preferrred. The hydrogen bonding compound is used preferably in an amount of 0.1 to 1 mol per mol of the monomer unit of the polymer having amino groups.

The positive electrode material according to the first aspect of the present invention preferably further contains a phenolic compound such as m-cresol. Such a phenolic compound extends the molecular chain of the polymer having amino groups such as polyaniline so as to make more effective the bridging of the molecular chain of the polymer which is performed by the hydrogen bonding compound.

The positive electrode material according to the first aspect of the present invention can be prepared by adding the polymer having amino groups preferably to the phenolic compound such as cresol, and dispersing the polymer having the amino groups into the phenolic compound by applying a method using an ultrasonic wave. Then, the resulting liquid is added with the hydrogen bonding compound and sufficiently stirred. The thus obtained viscous solution may be coated on an electrically conductive substrate (positive electrode current collector) and dried to obtain a positive electrode for a lithium secondary battery. Also, it is possible to use a phenolic compound previously added with camphor sulfonic acid at a prescribed concentration.

Next, the positive electrode material according to the second aspect of the present invention comprises particles of a conductive polymer and particles of a conductive material.

In the second aspect of the present invention, it is possible to use a π-electron conjugated conductive polymer as the electrically conductive polymer, and the polyaniline compound and the polypyrrole compound in the first aspect of the present invention may be exemplified. These π-electron conjugated conductive polymers is used in the form of particles. The particles preferably have an average particle diameter not larger than 0.5 µm. Incidentally, the positive electrode material according to the first aspect of the present invention can also be used in the form of particles. In the case of using the positive electrode material according to the first aspect of the present invention, the viscous solution containing the polymer having amino groups, the phenolic compound and the hydrogen bonding compound may be added dropwise to a poor solvent for the polymer, such as ethanol, to obtain the positive material as powder, which may be further pulverized. Incidentally, the phenolic compound is removed by contact with the poor solvent. Even if the phenolic compound is removed in this way, the bridged structure of the polymer having the amino groups due to the hydrogen bonding compound is maintained.

According to the second aspect of the present invention, by using the π-electron conjugated conductive polymer in the form of particles together with particles of the conductive material, a sufficient electrical conductivity is exhibited even if the positive electrode material layer is formed thick, making it possible to provide a lithium secondary battery having a sufficiently high charge-discharge capacity.

The conductive material that is used in the second aspect of the present invention together with the π-electron conjugated conductive polymer is not particularly limited. It is possible to use, as the electrically conductive material, a conductive carbon material such as carbon, carbon black, Ketchen black or acetylene black, or an electron conductive polymer such as polythiophene, polyacetylene or polypyrrole, singly or in combination. The particles of these electrically conductive materials preferably have an average particle diameter of 10 nm to 10 µm.

In the second aspect of the present invention, the mixing ratio by weight of the particles of the π-electron conjugated conductive polymer to the particles of the electrically conductive material is preferably 1 : 1 to 100 : 1.

The positive electrode material according to the second aspect of the present invention can be prepared through preparing a slurry by dispersing particles of the π-electron conjugated polymer and particles of the electrically conductive material in an organic solvent together with a binder. As the binder, use may be made of, for example, polyvinylidene fluoride (PVdF), polyethylene/polymethacrylate copolymer and a rubber paste. The resulting slurry composition may be coated on a substrate (positive electrode current collector), and dried to obtain a positive electrode.

The positive electrode material for a lithium secondary battery according to the third aspect of the present invention comprises an electrically conductive polymer, and LiNiO₂ and/or LiFe₃PO₄. The polyaniline compound and the polythiophene compound according to the first aspect of the present invention can be used as the electrically conductive polymer. The polythiophene compound is preferably a polythiophene compound having repeating units represented by Formula (I) given below: 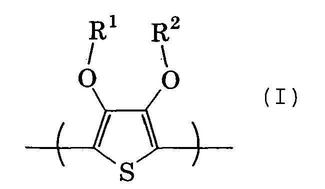 where R¹ and R² denote independently a hydrogen atom or an alkyl group having 1 to 4 carbon atoms, or may be bonded together to form an alkylene group having 1 to 4 carbon atoms or 1,2-cyclohexyne group. Poly(3,4-ethylenedioxythiophene) (PEDOT) is particularly preferred.

Polyaniline exhibits a redox reaction over a wide potential region of 2.9 to 4.0 V (vs. Li/Li⁺) in a PC/EC solution containing 1 M LiClO₄, and is known that it is electrically conductive within this potential region and exhibits the maximum value in the vicinity of 3.5 V. Also, it is known that a secondarily doped polyaniline exhibits a high electron conductivity of not lower than 300 Scm⁻¹ in the form of a thin film, and that the dependency of the electrical conductivity thereof is small.

A thin film electrode of a polythiophene compound, particularly, poly(3,4-ethylenedioxythiophene) (abbreviated as PEDOT) exhibits a flat response to the charging current over a wide potential region of 2.0 to 4.9 V (vs. Li/Li⁺) within an acetonitrile solution containing 1M LiClO₄ and exhibits the conductivity characteristics that the conductivity is increased from about 2.0 V and reaches the maximum value at 3.0 V, and the maximum value is maintained at the potentials of higher than 3.0 V. It is known that the PEDOT thin film doped with anions exhibits a high electron conductivity of not lower than 200 Scm⁻¹ (see C. Kvarustrom et al., Electrochimica Acta, 44, 2739-2750 (1999), L. Groenendaal et al., Synthetic Metals, 118, 105-109 (2001) and P.-H. Aubert et al., Synthetic Metals, 126, 193-198 (2002)).

Also, it is known that a thin film electrode of PEDOT has characteristics that the electrode begins to be doped with, for example, anions at a relatively low potential of 2.6 V (vs. Li/Li⁺) and exhibits a strong reducing function such that the electrode, if dipped in an organic solvent, exhibits a potential of 3.1 V. In other words, it is known that this thin film electrode is chemically stable within a wide potential region and a wide temperature region, exhibits a high electron conductivity, does not exhibit a clear faradic redox response, is capable of starting the p-type doping at a low potential, and exhibits a strong redox catalytic function (see N. Oyama et al., Electrochemical and Solid-State Letters, 6, A286-A289 (2003)).

On the other hand, LiNiO₂ and/or LiFePO₄ which is used in the positive electrode material according to the third aspect of the present invention together with the electrically conductive polymer described above, is low in its electrical conductivity, with the result that the excellent characteristics inherent therein (high energy density per unit volume) have not been educed in the past.

LiNiO₂ is low in its electrical conductivity. A LiNiO₂ thin film electrode is low in its redox reaction rate and reaches a decomposition potential region of a solvent, and thus it is impossible to obtain a clear peak of the redox current by the cyclic voltammetry method. However, since the redox potential of LiNiO₂ lies within the potential region in which polyaniline is reduced and oxidized, the redox catalyzing function on the oxidizing reaction of LiNiO₂ by polyaniline is expected. Also, in the case of LiFePO₄, which has a low electrical conductivity, the redox reaction rate is relatively high, and it exhibits a redox current peak corresponding to one electron in the potential region of 3.2 to 3.5 V.

The electron conductivity of PEDOT covers the redox potential regions of polyaniline, LiNiO₂ and LiFePO₄ and has the redox reaction catalyzing function even on the low potential side, with the result that PEDOT is expected to perform redox reaction catalyzing function on the reducing reaction side of LiNiO₂ and LiFePO₄. In this way, the electrically conductive polymer, particularly a combination of polyaniline and PEDOT, exhibits a high redox reaction catalyzing function and an electron conductivity can be imparted.

In LiNiO₂ and/or LiFePO₄ which is used together with the electrically conductive polymer described above in the positive electrode material according to the third aspect of the present invention, it is possible for the transition metal element such as Ni or Fe to be replaced by another element so as to improve the stability of the structure against the repetition of the oxidizing reaction and the reducing reaction. Its inherent excellent properties (capacity, etc.) has not been able to be educed in the past, since the inorganic oxide is poor in its electrical conductivity By combining the inorganic oxide noted above with the electrically conductive polymer, particularly, a polyaniline compound and/or a polythiophene compound according to the present invention, it possible to obtain a positive electrode material excellent as a whole in the electrical conductivity, the battery capacity and the discharge efficiency.

It is preferable for the weight ratio of the conductive polymer to LiNiO₂ and/or LiFePO₄ to be 1 to 10 : 99 to 90. If the amount of the conductive polymer is smaller than this range, it may be difficult to obtain the desired effect sufficiently. On the other hand, if the amount of the conductive polymer is larger than this range, the resulting film becomes hard so as to be unlikely to be cracked or broken in the case where the conductive polymer is a polyaniline compound, while where the conductive polymer is a polythiophene compound, the density of the resulting electrode is lowered, and the amount of LiNiO₂ and/or LiFePO₄ is decreased, with the result that the battery capacity is decreased.

The positive electrode material according to the third aspect of the present invention may contain an electrically conductive carbon material (particles) such as carbon, carbon black or an acetylene black as an auxiliary conductive material. The auxiliary conductive material can be used in an amount of 0.5 to 20% based on the weight of the positive electrode material.

The positive electrode material according to the third aspect of the present invention can be formed into a positive electrode by preparing a slurry composition by mixing the conductive polymer and LiNiO₂ and/or LiFePO₄ particles with an organic solvent together with an electrically conductive agent, if required, followed by kneading the mixture, and coating the slurry composition on a substrate (positive electrode current collector), followed by drying. In the case of using a polythiophene compound (alone) as the electrically conductive polymer, it is possible to use the binder noted above. In the case where the electrically conductive polymer comprises a polyaniline compound, a binder need not be added separately since the polyaniline compound itself performs the function of the binder.

The positive electrode material of the present invention is used in a lithium secondary battery comprising a positive electrode, a negative electrode and an electrolyte layer interposed between the positive electrode and the negative electrode. The positive electrode material according to each of the first to third aspects of the present invention is applied on the positive electrode current collector as a layer.

As the current collector, use may be made of a foil of a metal such as stainless steel, aluminum, copper, or titanium. It is particularly preferable to use a carbon thin film-coated aluminum foil current collector. Compared with an aluminum substrate that is not coated with a carbon thin film, the aluminum substrate coated with a carbon thin film is excellent in its adhesivity to the positive electrode active material so as to produce the merits that the contact resistance is lowered and that it is possible to prevent the corrosion of aluminum.

As the negative electrode of the lithium secondary battery, use may be made of a material capable of reversibly absorbing and releasing lithium ions, and a negative electrode active material including lithium metal or a lithium alloy. As the lithium alloy, a lithium/aluminum alloy, a lithium/tin alloy, and a lithium/silicon alloy may be used. The material capable of reversibly absorbing and releasing lithium ions includes a carbonaceous material, and any kind of carbon negative electrode active materials generally used in lithium ion secondary batteries can be used. Typical examples thereof include a crystalline carbon and an amorphous carbon, and these can be used singly or in combination.

The electrolytic solution used in the lithium secondary battery contains a lithium salt as the electrolyte and also contains a nonaqueous organic solvent as an organic solvent for the electrolyte. The nonaqueous organic solvent preferably comprises an ester having a high dielectric constant, and use may be made of one or more of solvents selected from the group consisting of, for example, dimethyl carbonate (DMC), ethyl methyl carbonate (EMC), diethyl carbonate (DEC), methyl propyl carbonate, ethylene carbonate (EC), propylene carbonate (PC) and γ-butyrolactone.

As the lithium salt noted above, use may be made of one or more compounds selected from the group consisting of, for example, lithium hexafluorophosphate (LiPF₆), lithium tetrafluoroborate (LiBF₄), lithium hexafluoroarsenate (LiAsF₆), lithiumu perchlorate (LiClO₄), lithium trifluoromethanesulfonate (CF₃SO₃Li), and lithium bis(trifluoromethyl)sulfoneimide (LiN(SO₂CF₃)₂). The lithium salt providing the electrolyte is used in a concentration falling within a range of 0.5 to 2.5 mols/liter.

The present invention will now be described more in detail by way of Examples. The present invention is not limited to these Examples.

Examples 1 to 7 (Study on the amount of protonic acid):

As polyaniline (hereinafter abbreviated as PANI), polyaniline of an emeraldine base type having a molecular weight of 15,000-50,000 and having a ratio of the oxidized form to the reduced form of 51 : 49 was purchased from Chemipro Kasei K.K. (trade name, KEMIPOL) and was used. This PANI was added to a m-cresol solvent and stirred for one day while applying an ultrasonic wave, dissolving the PANI. Then, camphor sulfonic acid (hereinafter abbreviated as CSA) as a secondary dopant was added in small proportions, followed by further stirring the solution for one day to prepare a PANI solution having a high viscosity. The CSA was used in an amount shown in Table 1 per mol of the monomer unit of PANI.

Next, an amount of the PANI solution that provided a prescribed thickness was cast onto a glass plate having a frame formed thereon with an adhesive tape beforehand, and vacuum dried at 80°C for one day by using a vacuum drying machine. Thus, a thin film of PANI having a thickness of 10 to 50 µm was prepared.

**Table 1**

| | PANI (moles) | CSA (moles) | Conductivity (Scm⁻¹) | Film thickness (µm) |
|---|---|---|---|---|
| Example 1 | 1 | 1.0 | 320 | 20 |
| Example 2 | 1 | 0.5 | 334 | 10 |
| Example 3 | 1 | 0.4 | 344 | 20 |
| Example 4 | 1 | 0.3 | 251 | 20 |
| Example 5 | 1 | 0.2 | 25 | 20 |
| Example 6 | 1 | 0.1 | 5 × 10⁻¹ | 20 |
| Example 7 | 1 | 0 | 6 × 10⁻³ | 20 |

### <Conductivity Measurement and Electrochemical Evaluation>

The electrical resistance of the PANI thin film formed on the surface of the glass plate in each of Experiments 1 to 7 was measured by a four-terminal resistance measuring method, and the electrical conductivity of the PANI thin film was obtained from the resistance value thus measured. The results are shown also in Table 1. As apparent from the results given in Table 1, the PANI thin film was found to exhibit a high electrical conductivity of not lower than 250 S/cm in the cases where the CSA amount per mol of the monomer unit of PANI falls within a range of 0.3 to 1.0 mol. On the other hand, it has also been found that the electrical conductivity of the PANI film was rapidly lowered in the case where the CSA amount was made smaller than 0.3 mol.

Also, PANI solutions prepared as in Experiments 1 to 7 were coated on glassy carbon electrodes and dried to prepare evaluation electrodes. Further, using a three-electrode type electrolysis cell with the evaluation electrode as a functional electrode, a silver ion electrode as a reference electrode and a coiled electrode of a platinum wire as a counter electrode, the cyclic voltammetry (hereinafter referred to as CV method) was performed within a PC-EC 1 : 1 : mixed solvent containing 1 mol/liter of LiBF₄. As a result, a current-potential curve denoting the redox response inherent in the PANI appeared on any of the electrodes. However, it has been found that the current-potential curve is shifted toward the positive potential side with increase in the CSA amount. It has also been found that, in the PANI film electrode having the CSA amount not smaller than 0.3 mol, the shape of the current-potential curve was also stabilized.

### Working Example 1

A PANI solution having a high viscosity was prepared as in Example 1, except that, after PANI was dissolved in m-cresol, 2,2'-bipyridyl was added in the same equivalent as the PANI monomer unit. The addition amount of CSA was 1 mol per monomer unit of PANI.

Using the PANI solution thus prepared, a GC electrode covered with the PANI film was prepared as in Examples 1 to 7, and its electrochemical response was examined by the CV method. When the measurement was performed by changing the potential sweeping rate within a range of 1 to 100 mV/sec, it has been found that the reaction rate of the redox response of PANI was increased, compared with the untreated polyaniline electrode. It has also been found that the GC electrode was highly stable relative to the repeated potential sweeping operations.

### Working Example 2

Each of the PANI solutions prepared as in Examples 1 to 7 and Working Example 1 was added in small proportions to a large amount of an ethanol solution and stirred to form particulate material. Operations of separating the particulate material thus prepared by filtration, and dispersing again the separated particulate material in an ethanol solution followed by filtration were repeated several times, and then drying was conducted to prepare PANI particles for a positive electrode material. The fine particles of PANI thus prepared was substantially free from m-cresol. Next, the PANI fine particles were pulverized to an average particle diameter of not larger than 0.5 µm by using a jet mill manufactured by Seishin Kigyo K.K.

The electrical conductivity as powder of the PANI particles having the particle size thus controlled was measured by using a powder resistance measuring apparatus. The PANI particles were found to have retained a high electrical conductivity like the result of the measurement of the electrical conductivity of the PANI film of Example 1.

To the PANI fine particles thus prepared, a carbon powdery electrically conductive material such as graphite or Ketchen black was added, and mixed, to which a xylene solvent containing, as binders, 2% of PEEA and 6% of a rubber paste was added. The mixture was stirred in a ball mill for one day or more and kneaded to prepare positive electrode active material slurry composition.

The prepared positive electrode active material slurry composition was coated on a carbon-coated aluminum foil current collector, and dried at 80°C for one hour. The dried electrode plate was made to have a thickness of 150 µm by using a roll press, preparing a positive electrode.

As a negative electrode, a lithium metal foil (thickness 50 µm) manufactured by Honjo Metal was used.

The prepared positive electrode was allowed to stand in a vacuum oven (60°C) for one hour or more and then transferred into a glove box in which the moisture and oxygen were controlled. A unit cell sized at 20 mm x 20 mm was fabricated within the glove box by using the positive electrode as well as a separator and the lithium negative electrode. Then, the outside of the unit cell was packaged with a wrapping material formed of an aluminum laminate film, followed by pouring an electrolytic solution under vacuum into the package and sealing the open portion of the package to finish preparation of a battery for evaluation. In this case, a mixed solvent of EC and DEC at 1 : 2 (volume ratio), containing 2 mols/liter of LiBF₄ was used as the electrolytic solution.

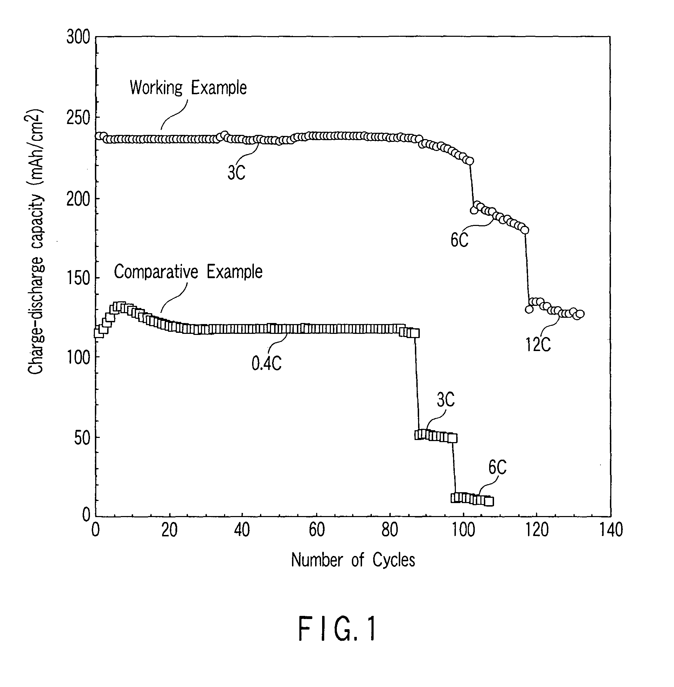

The battery for evaluation thus fabricated was tested using charge-discharge testing apparatus with the charge-discharge rate changed, and the influences by the change in rate on the battery characteristics were examined. The upper limit and the lower limit of the cut-off voltage were set at 4.2 V and 2.0 V, respectively, and the charge-discharge was repeated in the constant current-constant voltage (CCCV) mode. FIG. 1 shows an example of the result.

Test batteries each fabricated by using the positive electrode prepared by using the PANI solution of each of Examples 1 to 4 and Working Example 1 were subjected to the charge-discharge test. As a result, a high charge-discharge capacity of 180 to 240 mAh/g of positive electrode active material under the charge-discharge at the rate of 0.4C was obtained. The charge-discharge efficiency was than 97% or more.

The plot given as Working Example in FIG. 1 denotes the charge-discharge cycle characteristics of the test battery fabricated by using the positive electrode from Working Example 1 of the present invention. In each of the first to ninety-eighth cycles, the charge-discharge was repeated at the rate of 3 C and, then, the charge-discharge was further continued at the rate of 6 C and 12 C. The positive electrode of Working Example 1 of the present invention was capable of discharge at a high capacity of 238 mAh/g of positive electrode active material even at the rate of 3 C, capable of discharge at 80% of the capacity noted above at the rate of 6C, and further capable of discharge at 50% of the capacity noted above even at the rate of 12C. The capacity of 240 mAh/g of positive electrode active material indicates that the redox reaction of the polyaniline proceeds stably, reversibly and at a high rate to reach a level corresponding to 0.8 electrons or more. In general, a polyaniline secondary battery was considered to correspond to about 0.3 to 0.5 electrons. The polyaniline secondary battery according to the present invention was found to have a capacity at least 1.5 times as high as that of the conventional polyaniline secondary battery and to be capable of high speed charge-discharge. This is considered to be due to the fact that the conductivity of polyaniline is increased and the molecular structure of polyaniline is controlled, thereby activating the redox reaction.

On the other hand, the test batteries fabricated by using the positive electrodes prepared from the PANI solutions of Examples 5 to 7 were subjected to the charge-discharge test, with the result that the charge-discharge capacity of 115 to 145 mAh/g of positive electrode active material was obtained at the charge-discharge rate of 0.4 C. The charge-discharge efficiency was 97% or more. When the charge-discharge rate was increased to 3C and, further, to 6C, the secondary battery was charged or discharged only up to about 45% to about 10% of the charge-discharge capacity. The plot given as Comparative Example in FIG. 1 denotes the result of the charge-discharge test of the test battery fabricated similarly by using the positive electrode material of Example 7.

### Working Example 3

N-methylpyrrolidinone was added to a mixture of 85 parts by weight of LiFePO₄ particles prepared by the calcination method and having an average particle diameter of 2 µm, 15 parts by weight of the PANI used in Examples 1 to 7, and 10 parts by weight of carbon black used as an auxiliary conductive material, and the mixture was kneaded to obtain a paste, which was coated on an aluminum foil having a thickness of 15 µm. After being dried and finished under pressure, the aluminum foil was cut to a size of 4 x 4 cm (total thickness of 75 µm) to obtain a positive electrode.

A lithium secondary battery was fabricated by using this positive electrode, a lithium metal foil as a negative electrode, and an electrolytic solution prepared by dissolving lithium hexafluorophosphate at a concentration of 1 M in a mixed solvent of EC and DEC (volume ratio 3 : 7). The fabricated secondary battery was subjected to a charge-discharge test (20°C). The charging was carried out to 4.2 V at a constant current of 0.65 mA, while the discharging was carried out to the finish voltage of 2.0 V at 1.3 mA, 6.5 mA, and 19.5 mA. Also, the charging was carried out at 0°C and at 6.5 mA. Table 2 shows the results in respect of the discharge capacity.

### Working Example 4

N-methylpyrrolidinone was added to a mixture of 80 parts by weight of LiFePO₄ particles prepared by the calcination method and having an average particle diameter of 2 µm, 5 parts by weight of PEDOT, 10 parts by weight of carbon black as an auxiliary conductive material, and 5 parts by weight of polyvinylidene fluoride (PVdF) as a binder, and the mixture was kneaded to obtain a paste, which was coated on an aluminum foil having a thickness of 15 µm. After being dried and finished under pressure, the aluminum foil was cut a size of 4 x 4 cm (total thickness of 75 µm) to obtain a positive electrode. Further, a lithium secondary battery was fabricated as in Working Example 3 by using this positive electrode, and a charge-discharge test was conducted. Table 2 also shows the result in respect of the discharge capacity.

### Working Example 5

N-methylpyrrolidinone was added to a mixture of 85 parts by weight of LiFePO₄ particles prepared by the calcination method and having an average particle diameter of 2 µm, 5 parts by weight of PANI used in Examples 1 to 7, 5 parts by weight of PEDOT, and 5 parts by weight of carbon black as an auxiliary conductive material, and the mixture was kneaded to obtain a paste, which was coated on an aluminum foil having a thickness of 15 µm. After being dried and finished under pressure, the aluminum foil was cut to a size of 4 x 4 cm (total thickness 75 µm) to obtain a positive electrode. A lithium secondary battery was fabricated as in Working Example 3 by using this positive electrode, and a charge-discharge test was conducted. Table 2 also shows the result in respect of the discharge capacity.

### Comparative Example 1:

N-methylpyrrolidinone was added to a mixture of 85 parts by weight of LiFePO₄ particles prepared by the calcination method and having an average particle diameter of 2 µm, 10 parts by weight of carbon black as an auxiliary conductive material, and 5 parts by weight of polyvinylidene fluoride (PVdF) as a binder, and the mixture was kneaded to obtain a paste, which was coated on an aluminum foil having a thickness of 15 µm. After being dried and finished under pressure, the aluminum foil was cut to a size of 4 x 4 cm (total thickness 75 µm) to obtain a positive electrode. A lithium secondary battery was fabricated as in Example 3 by using this positive electrode, and a charge-discharge test was conducted. Table 2 also shows the result in respect of the discharge capacity.

**Table 2**

| | Discharge capacity (mAh/g of LiFePO₄) | | | |
|---|---|---|---|---|
| | 20°C | | | 0°C |
| | 1.3 mA | 6.5 mA | 19.5 mA | 6.5 mA |
| Example 3 | 145 | 116 | 74 | 56 |
| Example 4 | 138 | 111 | 83 | 75 |
| Example 5 | 160 | 137 | 105 | 100 |
| Comparative Example 1 | 121 | 102 | 70 | 50 |

From the results given in Table 2, it can be seen that the secondary battery of each of Working Examples 3 to 5 is excellent in the capacity, the discharge efficiency and the low temperature characteristics.

### Working Example 6

A positive electrode was prepared as in Working Example 5, except that LiNiO₂ particles prepared by the calcination method and having an average particle diameter of 2 µm were used. A lithium secondary battery was fabricated as in Working Example 3 by using this positive electrode, and the charge-discharge properties were examined by using a charge-discharge test apparatus.

The discharge capacity at 20°C was such that the energy density of 190 to 210 mAh/g of positive electrode active material can be taken out, and the deterioration rate caused by the charge-discharge cycle at the rate of 1 C was 10% or more after 200 cycles, indicating a stable property. Also, in the charge-discharge test at 0°C, an energy density not lower than 160 mAh/g of positive electrode active material was obtained.

## Claims

1. A positive electrode material for a lithium secondary battery, comprising an electrically conductive polymer having an amino group, a hydrogen bonding compound, and a protonic acid.

2. The positive electrode material for a lithium secondary battery according to claim 1, further comprising a phenolic compound.

3. The positive electrode material for a lithium secondary battery according to claim 1, wherein the electrically conductive polymer comprises a polyaniline compound or a polypyrrole compound.

4. The positive electrode material for a lithium secondary battery according to claim 1, wherein the protonic acid comprises a camphor sulfonic acid.

5. The positive electrode material for a lithium secondary battery according to claim 1, wherein the hydrogen bonding compound comprises a bipyridyl compound.

6. The positive electrode material for a lithium secondary battery according to claim 1, which is in the form of particles.

7. The positive electrode material for a lithium secondary battery according to claim 6, which further comprises particles of an electrically conductive material.

8. A positive electrode material for a lithium secondary battery, comprising a positive electrode material comprising particles of an electrically conductive polymer and particles of an electrically conductive material.

9. The positive electrode material for a lithium secondary battery according to claim 8, wherein the electrically conductive polymer is at least one electrically conductive polymer selected from the group consisting of a polyaniline compound, a polythiophene compound and a polypyrrole compound.

10. A positive electrode material for a lithium secondary battery, comprising an electrically conductive polymer and at least one compound selected from the group consisting of LiNiO₂ and LiFePO₄.

11. The positive electrode material for a lithium secondary battery according to claim 10, wherein the electrically conductive polymer comprises a polyaniline compound.

12. The positive electrode material for a lithium secondary battery according to claim 10, wherein the electrically conductive polymer comprises a polythiophene compound.

13. The positive electrode material for a lithium secondary battery according to claim 10, wherein the electrically conductive polymer comprises a polyaniline compound and a polythiophene compound.

14. The positive electrode material for a lithium secondary battery according to claim 10, wherein the positive electrode material further comprises particles of an electrically conductive material.

## Amended claims

### Amended claims under Art. 19.1 PCT

**1.** A positive electrode material for a lithium secondary battery, comprising an electrically conductive polymer having an amino group, a hydrogen bonding compound, and a protonic acid.

**2.** The positive electrode material for a lithium secondary battery according to claim 1, further comprising a phenolic compound.

**3.** The positive electrode material for a lithium secondary battery according to claim 1, wherein the electrically conductive polymer comprises a polyaniline compound or a polypyrrole compound.

**4.** The positive electrode material for a lithium secondary battery according to claim 1, wherein the protonic acid comprises a camphor sulfonic acid.

**5.** The positive electrode material for a lithium secondary battery according to claim 1, wherein the hydrogen bonding compound comprises a bipyridyl compound.

**6.** The positive electrode material for a lithium secondary battery according to claim 1, which is in the form of particles.

**7.** The positive electrode material for a lithium secondary battery according to claim 6, which further comprises particles of an electrically conductive material.

**8.** (Deleted)

**9.** (Deleted)

**10.** (Deleted)

**11.** (Deleted)

**12.** (Deleted)

**13.** (Deleted)

**14.** (Deleted)
